# EUROPÄISCHE PATENTSCHRIFT

(11) **EP 0 384 201 B1**
(45) Veröffentlichungstag und Bekanntmachung des Hinweises auf die Patenterteilung: **20.04.1994**
(21) Anmeldenummer: 90102222.8
(22) Anmeldetag: 05.02.1990
(51) Int. Cl.: G02B 6/44, H02G 1/08

(54) **Verfahren zum Einschiessen von Kabeln in ein Rohr**
Method of inserting cables in a duct
Procédé d'injection des câbles dans un conduit

(30) Priorität: 20.02.1989 DE 3905154
(43) Veröffentlichungstag der Anmeldung: 29.08.1990
(73) Patentinhaber: SIEMENS AKTIENGESELLSCHAFT, 80333 München (DE)
(72) Erfinder: Oestreich, Ulrich, Dipl.-Ing., D-8000 München 70 (DE)

(56) Entgegenhaltungen:
- EP-A- 0 108 590
- EP-A- 0 186 753
- FR-A- 2 585 139
- US-A- 4 030 702

## Beschreibung

Verfahren zum Einziehen von Kabeln in ein Rohr mittels eines des Kabel transportierenden strömenden Mediums, das am nahen Ende des Rohres hineingepreßt wird und am fernen Ende ausströmt

Ein Kabel dieser Art ist das der EP-A 0 186 753 bekannt. Dabei sind in einem größeren Rohrquerschnitt mehrere, im Querschnitt relativ klein gehaltene Längskanäle vorgesehen, in welche einzeln ein oder mehrere Lichtwellenleiteradern eingezogen werden können. Wegen der Kleinheit der Querschnitte dieser Längskanäle sind besondere Maßnahmen im Bereich des Druckanschlusses für das strömende Medium nicht erforderlich. In vielen Fällen ist es aber wünschenswert, entweder Kabel in vorhandene Rohre mit relativ großen Durchmesser (z.B. 10 cm) einzuziehen bzw. solche einfachen und universell verwendbaren Rohre zu verlegen, die wegen der vorgegebenen geringen Querschnittsfläche der Längskanäle nur ein Ziehen ganz bestimmter Lichtquellenleiteradern oder sehr dünner Kabel zulassen. Neben den Nachteil, daß in derartige dünne Kanäle nur Lichtquellenleiteradern mit relativ geringem Querschnitt eingeblasen werden können, ergibt sich auch das Problem, daß die Reichweite derartige Systeme auch bei hohen Drücken begrenzt ist.

Der vorliegenden Erfindung liegt die Aufgabe zugrunde, ein Verfahren anzugeben, bei dem in für das Einziehen bestimmte Rohre jederzeit - gegebenenfalls auch nachträglich - ohne großen Aufwand Lichtwellenleiterkabel eingeschossen werden können. Diese Aufgabe wird bei einem Verfahren der eingangs genannten Art dadurch gelöst, daß das nahe Ende des Rohres mit einer Mehrzahl von zunächst verschlossenen Eintrittskanälen für die Kabel aufweisenden Druckkappe druckdicht abgeschlossen wird,
daß jeweils einer der Eintrittskanäle geöffnet und das Kabelende eines einzuschießenden Kabels dort eingeführt und durch das am nahen Ende hineingepreßte turbulent strömende Medium zum fernen Ende transportiert wird.

An die Rohre als solche brauchen somit bei dem erfindungsgemäßen Verfahren keine besonderen Ansprüche gestellt werden, weil die Druckkappe jederzeit bei Bedarf aufgebracht werden kann. Der zu Verfügung stehende freie Querschnitt im Inneren der Rohre kann zudem, je nach den jeweiligen Anforderungen, mehr oder weniger aufgefüllt werden und zwar auch zu verschiedenen Zeiten und gegebenenfalls mit unterschiedlichen Kabeltypen. Vorher eingeschossene oder angeschlossene Kabel behindern das Einfördern weiterer Kabel nicht, so lange der Rohrquerschnitt durch die Kabel nicht nennenswert verringert wird. Beispielsweise können in einem Rohr von 10 cm lichter Weite noch sicher etwa 30 Kabel mit einem Außendurchmesser in der Größenordnung von 6 mm und mit je etwa 6 Lichtquellenleitern eingezogen werden, so daß insgesamt maximal ca. 180 Lichtquellenleiter für die Übertragung zu Verfügung stehen. Insgesamt sollte der Rohrquerschnitt maximal mit weniger als 20%, vorzugsweise nur maximal zwischen 10% und 15%, mit eingeschossenen Kabeln gefüllt werden.Das (ferne) Austrittsrohrende bleibt während des Einschiessens offen und wird zweckmäßig danach gegen Wassereintritt gesichert, z. B. durch Verwendung eines ausgeschnittenen Deckels und einer Dichtmasse oder dergleichen.

Bevorzugt werden bei der Erfindung optische Kabel eingeschossen, da diese besonders leicht und weitgehend flexibel sind. Die Kabelmäntel sind beim Einziehvorgang - sofern dies nicht bereits rechtzeitig erfolgte - unterschiedlich zu kennzeichnen, um die Identifizierung der einzelnen Kabel am fernen Rohrende zu erleichtern. Sollte die Gefahr bestehen, daß das Rohr von außen zerstört wird, so ist eine Kennzeichnung über die ganze Länge zweckmäßig, um bei den Reparaturarbeiten die Identifizierung zu erleichtern. Eine derartige fortlaufende Markierung kann auch während des Einziehvorganges, z.B. durch einen einfachen Foliendrucker vorgenommen werden.

Es ist zweckmäßig, zugfeste optische Kabel zu verwenden, wobei der Außendurchmesser dieser entsprechend flexiblen Kabel in einem Bereich zwischen 4 mm und 10 mm liegen sollte. Die lichte Weite, der für die Aufnahme der optischen Kabel vorgesehenen Rohre, liegt zweckmäßig zwischen 5 cm und 10 cm und muß dem Durchmesser und der Anzahl der einzubringenden Kabel angepaßt sein.

Bei Verwendung (z.B. durch eingelegte Aramidgarne) armierter optischer Kabel kann ein normaler Einziehprozeß über gerade Strecken mit einem Einblasprozeß nach der Erfindung über stark gekrümmte Teilstrecken kombiniert werden. Auf diese Weise sind sehr lange Kabelstücke einzieh- und einblasbar, z .B. einziehen über eine Länge von 500 m, dann einblasend über 500 m mit Hilfsraupe vor dem Druckstutzen und ein weiteres Einziehen über nochmals 500 m.

Die Erfindungen und ihre Weiterbildungen werden nachfolgend anhand von Zeichnungen näher erläutert:
Figur 1 im Querschnitt ein für die Durchführung des erfindungsgemäßen Verfahrens vcrbereitetes Rohrende,
Figur 2 einen Querschnitt durch das Rohr nach Figur 1 in Richtung auf die Druckkappe gesehen und
Figur 3 in schematisch er Darstellung den Aufbau einer aus mehreren Einzelrohren bestehenden Rohrstrecke.

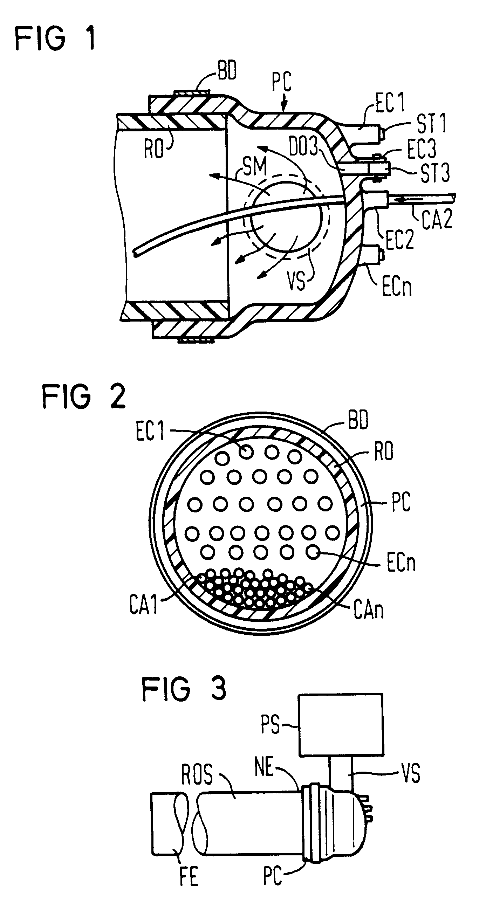

In Figur 1 ist das vorzugsweise aus Kunststoff bestehende Rohr mit RO bezeichnet, wobei hier das nahe Ende dargestellt ist, d.h. derjenige Teil, in dem die Einführung der Kabel und die Zuführung des strömenden Mediums erfolgt. Das Rohr RO ist mit einer Druckkappe PC druckdicht verschlossen, welche beispielsweise durch eine Schelle oder Bandage BD am Ende des Rohres RO befestigt ist. Über einen von hinten kommenden Anschluß VS in der Druckkappe PC wird das strömende Medium SM zugeführt, welches von einer entsprechenden Druckquelle PS (vgl. Figur 3) geliefert wird.

Es kann sich dabei um eine Flüssigkeit oder bevorzugt um Luft handeln.

In die Druckkappe PC sind eine Reihe von Eintrittskanälen EC1 - ECn eingearbeitet, die etwa parallel zur Längsachse des Rohres RO verlaufen. Jeder dieser Eintrittskanäle weist eine Durchtrittsöffnung auf, wie sie bei dem Eintrittskanal EC3 sichtbar und mit DO3 bezeichnend ist. Normalerweise ist jeder dieser Eintrittskanäle EC1-ECn mit einem Stopfen (bei EC3 mit ST3 bezeichnet) verschlossen, der druckdicht gehalten ist, beispielsweise durch eine entsprechende Schlauchklemme oder dadurch, daß der Stopfen mittels eines Gewindes eingeschraubt wird. Es sind insgesamt so viele Eintrittsöffnungen EC1-ECn vorgesehen, wie später optische Kabel maximal eingezogen werden sollen. Im vorliegenden Beispiel ist dargestellt, wie ein optisches Kabel CA2 in den Eintrittskanal EC2 eingezogen wird. Hierzu kann eine (rechts vom Eintrittskanal EC2 liegende und hier nicht dargestellte) einfache Schubeinrichtung (z.B. Raupe) vorgesehen sein, welche eine Längskraft auf das optische Kabel CA2 ausübt und dieses in das Innere des Rohres RO hineinbefördert. Die eigentliche Weiterbewegung, und zwar auch bei gekrümmten Rohrverlauf, wird jedoch durch das stark turbulent strömende Medium SM bewirkt, welches an das jeweils einzuziehende optische Kabel, z.B. CA2 angreift und dieses wellenförmig verformt und dabei in Längsrichtung bewegt. Es handelt sich also um einen Schubprozeß, d.h. Angriff des strömenden Mediums bei jedem Wellenberg des Kabels. Die Verwendung von Kolben, oder dergleichen am fernen Kabelende, ist bei diesem Verfahren überflüssig. Derartige Einziehhilfen würden auch den Nachteil mit sich bringen, daß es durch sie z .B. an Engstellen leicht zu einer Blockierung kommt, was bei einem einfach glattgeschnittenen, nicht verdickten fernen Kabelende wie bei der Erfindung, nicht der Fall ist. Es genügt am fernen Kabelende eine einfache Schutzkappe, die ein Aufspießen oder Aufspleißen des Kabels verhindert. Dieser Einschießvorgang wird von bereits eingezogenen oder eingeschossenen Kabeln nicht nennenswert behindert oder beeinflußt. Es ist zweckmäßig, möglichst einheitliche Kabel einzuschießen. Die Kabel sollen auch ausreichend flexibel sein, um von dem turbulent strömenden Medium in Wellenform gebracht und dadurch vorwärts bewegt zu werden. Ein Längszug (z.B. durch einen Kolben am Kabelanfang) wurde das Kabel strecken und dadurch die Wellenform beseitigen und einen "gequanteten Vorschub" durch Angriff der turbulenten Strömung auf die Wellenberge verhindern. Nach dem Einziehvorgang kann die Eintrittsstelle beim jeweiligen Eintrittskanal, z.B. EC2, zusätzlich abgedichtet werden, wodurch das Eindringen von Wasser in das verlegte Kabelrohr verhindert wird. In diesem Fall ist es zweckmäßig auch das ferne Rohrende FE nach Figur 3 der Rohrleitungsstrecke ROS entsprechend abzudichten, z.B. durch eine entsprechende Füllmasse aus Bitumen. Während des eigentlichen Einziehvorganges ist dagegen das ferne Rohrende FE offen, während das nahe Rohrende NE durch die Druckkappe PC verschlossen ist.

Insgesamt ergibt sich nach dem Einziehen mehrerer Kabel CA1 - CAn und nach dem Abschluß des Einziehvorganges eine Struktur, ähnlich der Darstellung nach Figur 2. Die optischen Kabel CA1-CAn liegen auf den Boden des Rohres RO. Zur Verbesserung der Übersichtlichkeit der Darstellung ist derjenige Bereich der optischen Kabel CA1-CAn weggelassen, der jeweils von dem betreffenden Eingangskanal bogenförmig bis zur dargestellten Lage der optischen Kabel CA1-CAn verläuft.

## Patentansprüche

1. Verfahren zum Einziehen von Kabeln (CA1-CAn) in ein Rohr (RO) mittels eines das Kabel transportierenden strömenden Mediums, das am nahen Ende (NE) des Rohres (RO) hineingepreßt wird und am fernen Ende (FE) ausströmt,
**dadurch gekennzeichnet,**
daß das nahe Ende (NE) des Rohres (RO) mit einer eine Mehrzahl von zunächst verschlossenen Eintrittskanälen (EC1-ECn) für die Kabel (CA1-CAn) aufweisenden Druckkappe (PC) druckdicht abgeschlossen wird,
daß jeweils einer der Eintrittskanäle (z.B. EC2) geöffnet und das Kabelende eines einzuschießenden Kabels (CA2) dort eingeführt und durch das am nahen Ende (NE) hineingepreßte turbulent strömende Medium (SM) zum fernen Ende (FE) transportiert wird.

2. Verfahren nach Anspruch 1,
**dadurch gekennzeichnet,**
daß das ferne Rohrende (FE) während des Einschießens offen gehalten wird.

3. Verfahren nach einem der vorhergehenden Ansprüchen,
**dadurch gekennzeichnet,**
daß das ferne Rohrende (FE) nach dem Einschießen mit einer Verschlußeinrichtung (z.B. Füllmasse) abgeschlossen wird.

4. Verfahren nach einem der vorhergehenden Ansprüche,
**dadurch gekennzeichnet,**
daß die Kabelmäntel der Kabel (CA1-CAn) beim Einziehen, vorzugsweise über die ganze Länge, gekenneichnet werden.

5. Verfahren nach einem der vorhergehenden Ansprüche,
**dadurch gekennzeichnet,**
daß optische Kabel (CA1-CAn) mit jeweils mehreren Lichtwellenleitern eingeschossen werden.

6. Verfahren nach einem der vorhergehenden Ansprüche,
**dadurch gekennzeichnet,**
daß der Durchmesser der Kabel (CA1-CAn) zwischen 4 mm und 10mm gewählt wird.

7. Verfahren nach einem der vorhergehenden Ansprüche,
**dadurch gekennzeichnet,**
daß der Rohrquerschnitt zu weniger als 20% mit Kabeln gefüllt wird.

## Claims

1. Method for drawing cables (CA1-CAn) into a pipe (RO) by means of a flowing medium which transport the cable, is forced in at the rear end of (NE) of the pipe (RO) and flows out at the remote end (FE), characterized in that the rear end (NE) of the pipe (RO) is sealed in a pressure tight manner by means of a pressure cap (PC) which has a plurality of initially closed inlet channels (EC1-ECn) for the cables (CA1-CAn), in that in each case one of the inlet channels (for example EC2) is opened and the cable end of a cable (CA2) which is to be inserted is introduced there and is transported to the remote end (FE) by the medium (SM) which is forced in at the near end (NE) and flows in a turbulent manner.

2. Method according to Claim 1, characterized in that the remote pipe end (FE) is held open during the insertion.

3. Method according to one of the preceding claims, characterized in that the remote pipe end (FE) is sealed by a closing device (for example filling compound) after insertion.

4. Method according to one of the preceding claims, characterized in that the cable sheaths of the cables (CA1-CAn) are marked while they are being drawn in, preferably over the entire length.

5. Method according to one of the preceding claims, characterized in that optical cables (CA1-CAn) are inserted, each having a plurality of optical fibres.

6. Method according to one of the preceding claims, characterized in that the diameter of the cables (CA1-CAn) is selected to be between 4 mm and 10 mm.

7. Method according to one of the preceding claims, characterized in that the pipe cross-section is less than 20% filled with cables.

## Revendications

1. Procédé pour faire passer des câbles (CA1 à CAn) dans un tuyau (RO) au moyen d'un fluide en écoulement de transport du câble, qui est injecté à l'extrémité proche (NE) du tuyau (RO) et qui sort à l'extrémité (FE) éloignée,
caractérisé en ce qu'il consiste
à fermer, d'une manière étanche à la pression, l'extrémité (NE) proche du tuyau (RO) par une coiffe (PC) résistant à la pression et comportant, pour les câbles (CA1 à CAn) une multiplicité de canaux (EC1 à ECn) d'entrée, qui sont d'abord fermés,
et à ouvrir, respectivement, l'un des canaux (par exemple EC2) d'entrée et à y introduire l'extrémité d'un câble (CA2) à faire passer et à le transporter vers l'extrémité (FE) éloignée, par le fluide (SM) s'écoulant de manière turbulente et injecté à l'extrémité (NE) proche.

2. Procédé suivant la revendication 1, caractérisé en ce qu'il consiste à maintenir ouverte l'extrémité (FE) éloignée du tuyau pendant le passage.

3. Procédé suivant l'une des revendications précédentes,
caractérisé
en ce qu'il consiste à fermer l'extrémité (FE) éloignée du tuyau, après le passage, par un dispositif de fermeture (par exemple par une matière de remplissage).

4. Procédé suivant l'une des revendications précédentes,
caractérisé
en ce qu'il consiste à repérer la gaine du câble (CA1 à CAn), lors du passage, de préférence sur toute la longueur.

5. Procédé suivant l'une des revendications précédentes,
caractérisé
en ce qu'il consiste à faire passer des câbles optiques (CA1 à CAn) ayant chacun plusieurs guides d'ondes lumineuses.

6. Procédé suivant l'une des revendications précédentes,
caractérisé
en ce qu'il consiste à choisir le diamètre des câbles (CA1 à CAn) entre 4 mm et 10 mm.

7. Procédé suivant l'une des revendications précédentes,
caractérisé
en ce qu'il consiste à emplir de câbles moins de 20 % de la section transversale du tuyau.
